# EUROPÄISCHE PATENTSCHRIFT

(11) **EP 2 120 182 B1**
(45) Veröffentlichungstag und Bekanntmachung des Hinweises auf die Patenterteilung: **17.02.2010**
(21) Anmeldenummer: 08011288.1
(22) Anmeldetag: 20.06.2008
(51) Int. Cl.: G06K 9/00

(54) **Verfahren und Vorrichtung zur automatischen Aufnahme eines Fingerabdruckes mit Echtheitserkennung**
Method and apparatus for automatic fingerprint capture with liveness detection.
Procédé et appareil de capture d'empreinte digitale avec détection de l'état vivant

(43) Veröffentlichungstag der Anmeldung: 18.11.2009
(73) Patentinhaber: DERMALOG Identification Systems GmbH, 20148 Hamburg (DE)
(72) Erfinder: Kulcke, Axel, 8382 Weiselbaum (AT); Wulf, Hans-Christian, 22587 Hamburg (DE); van Staa, Sebastian, 22303 Hamburg (DE); Hengfoss, Clarissa, 22305 Hamburg (DE); Mull, Günther, 22085 Hamburg (DE)
(74) Vertreter: UEXKÜLL & STOLBERG

(56) Entgegenhaltungen:
- EP-A- 1 353 292
- US-A- 5 810 723
- US-A1- 2006 062 438
- DAMIANOU D ET AL: "The wavelength dependence of pulse oximetry" 19960101, 1. Januar 1996 (1996-01-01), Seiten 7/1-7/3, XP006510347

## Beschreibung

Die Erfindung betrifft ein Verfahren zur automatischen Aufnahme eines Fingerabdruckes mit einer an ein Datenverarbeitungsgerät angeschlossenen, kamerabasierten Fingerabdruck-Aufnahmeeinheit mit einer Auflagefläche und mit Echtheitserkennung des auf die Fingerabdruck-Aufnahmeeinheit aufgelegten Fingers, wobei zur Echtheitserkennung eine Mehrzahl von Reflexionsmessungen in einer vorgegebenen Mehrzahl von Reflexionswellenlängenbereichen durchgeführt wird, wobei die kamerabasierte Fingerabdruck-Aufnahmeeinheit einen so angeordneten Kamerasensor hat, um von einem auf die Auflagefläche, die durch die Oberfläche eines Prismenkörpers gebildet wird, aufgelegten Finger reflektiertes Licht aufzunehmen.

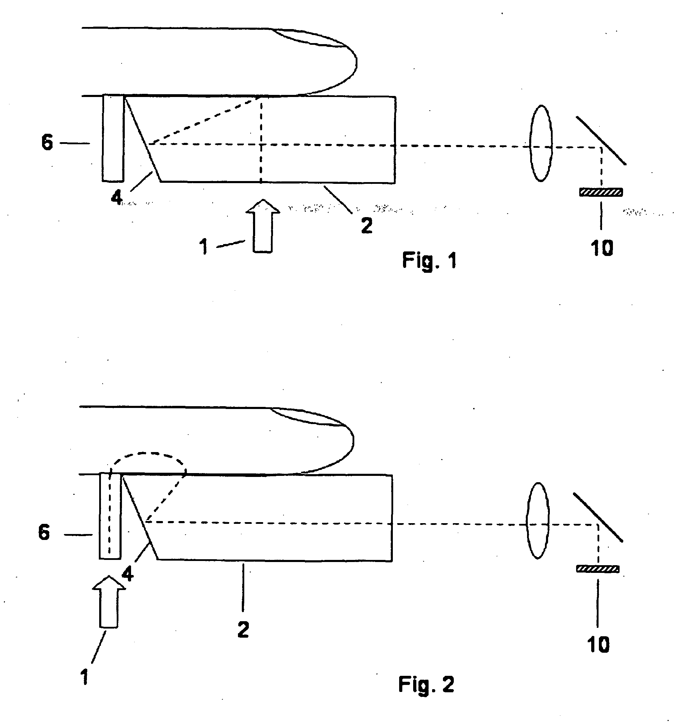

Aus US 2005/0205667 A1 bekannte Fingerabdruck-Aufnahmeeinheiten weisen typischerweise einen durchsichtigen Prismenkörper auf, auf dessen obere Oberfläche der Finger zur Aufnahme aufzulegen ist. Der Prismenkörper ist typischerweise ein Glaskörper. Eine Lichtquelle ist so angeordnet, um den auf den Prismenkörper aufgelegten Finger durch den Prismenkörper hindurch zu beleuchten. Ein ortsempfindlicher Sensor, also ein Kamerasensor, ist so angeordnet, um von dem aufgelegten Finger reflektiertes Licht, das durch den Prismenkörper hindurch zurückgeworfen wird, aufzunehmen. Solche Fingerabdruck-Aufnahmeeinheiten machen sich den Unterschied der Brechungsindezes einerseits zwischen dem Prismenkörper und darauf aufliegenden Hautbereichen und andererseit zwischen Prismenkörper und Luft, in den zwischen benachbarten Hautleisten liegenden Zwischenräumen, zunutze. Das an die Grenzfläche zwischen Prismenkörper 2, wie schematisch in Figur 1 dargestellt, und umgebender Luft bzw. Fingeroberfläche auftreffende Licht wird mittels diffuser Streuung in einigen Bereichen, nämlich in den Bereichen der Hautleisten, gestreut und fällt auf eine abgeschrägte, verspiegelte Seite 4 des Prismenkörpers. Dort wo keine Hautleiste aufliegt, verlassen die Lichtstrahlen das Prisma. Dadurch erscheinen die Zwischenräume der Hautleisten im Reflexionsbild als schwarz. Durch die Außenseite des Prismas eindringende Lichtstrahlen können dieses Verfahren nicht stören, da diese in einem derart flachen Winkel auf die Oberfläche fallen müssten, um über die abgeschrägte Seite 4 auf den Kamerasensor abgebildet zu werden, dass die Bedingung für Totalreflexion erfüllt wäre, und diese nicht in das Prisma eindringen könnten.

Es gibt eine Reihe von Verfahren, mit denen die so aufgenommenen Fingerabdruckbilder dann ausgewertet und mit vorhandenen bekannten Datensätzen zur Identifizierung verglichen werden können, siehe z.B. EP 1 498 837 A1.

Neben der qualitativ guten Aufnahme des Fingerabdruckbildes, das zur Identifizierung verwendet werden soll, ist es bei sicherheitsrelevanten Anwendungen (Identifizierung an zugangsbeschränkten Eingangsbereichen, an Geldautomaten, Prüfung der Zugangsberechtigung zu bestimmten Datenbereichen in Computern oder Verifizierung der Berechtigung zu bestimmten Anweisungen in Computern) von wesentlicher Bedeutung, dass die Echtheit des aufgelegten Fingers festgestellt wird, d.h. festgestellt wird, ob ein echter Finger aufliegt oder ob es sich um einen Fälschungsversuch (oder Falsifikat) handelt. Die Fälschungs-oder Täuschungsarten bei Fingerabdruck-Aufnahmeeinheiten lassen sich in drei Gruppen einteilen:
(1) Nachbildung von Fingerabdrücken auf einem Kunststoffkörper; dieser kann Stempelform, die Form eines nachgemachten Fingers oder einer imitierten Hand haben (im Nachfolgenden zusammenfassend "Stempelpolymer").
(2) Einsatz von dünnen Kunststofffolienüberzügen über einem echten Finger, wobei hier auch transparente Folienüberzüge verwendet werden können; eine besondere, in diese Gruppe fallende Technik ist die sogenannte Holzleim-Methode (im Nachfolgenden zusammenfassend "Folienüberzüge").
(3) Verwendung eines realen Fingers, wobei davon auszugehen ist, dass der Finger von der Person abgetrennt ist oder die Person nicht mehr lebt (im Nachfolgenden zusammenfassend "Leichenfinger").

In der oben genannten Druckschrift US 2005/0205667 ist erwähnt, dass Aufnahmen in verschiedenen Wellenlängenbereichen dazu dienen können, um Fälschungen zurückzuweisen, wobei aber keine weiteren Angaben zu der Art und Weise der Echtheitserkennung in dieser Hinsicht gemacht werden.

Die oben genannten verschiedenen Falsifikate zur Auflage auf einen Fingerabdruck-Scanner können ein einwandfreies Fingerabdruckbild liefern, sie unterscheiden sich aber in ihren optischen Eigenschaften, so dass alle Falsifikate zu erkennen und zurückzuweisen sind.

Aus US 2006/062438 A1 ist ein Verfahren gemäß Oberbegriff von Anspruch 1 bekannt, nämlich ein Verfahren zur automatischen Aufnahme eines Fingerabdruckes mit einer an einem Datenverarbeitungsgerät angeschlossenen, kamerabasierten Fingerabdruck-Aufnahmeeinheit mit einer Auflagefläche und mit Echtheitserkennung des auf die Fingerabdruck-Aufnahmeeinheit aufgelegten Fingers, wobei zur Echtheitserkennung eine Mehrzahl von Reflexionsmessungen in einer vorgegebenen Mehrzahl von Reflexionswellenlängenbereichen durchgeführt wird, wobei die kamerabasierte Fingerabdruck-Aufnahmeeinheit einen so angeordneten Kamerasensor hat, um von einem auf die Auflagefläche, die durch die Oberfläche eines Prismenkörpers (2) gebildet wird, aufgelegten Finger reflektiertes Licht aufzunehmen.

Aus EP 1 353 292 A1 sind ein Verfahren und eine Vorrichtung zur automatischen Aufnahme eines Fingerabdruckes mit einer an ein Datenverarbeitungsgerät angeschlossenen Fingerabdruck-Aufnahmeeinheit und mit Echtheitserkennung des auf die Fingerabdruck-Aufnahmeeinheit aufgelegten Fingers bekannt, wobei zur Echtheitserkennung eine Lichtquelle über der Auflagefläche so angeordnet ist, dass ein Finger in den Zwischenraum zwischen Auflagefläche und Lichtquelle eingeschoben und auf die Auflagefläche aufgelegt werden kann und Licht in die von der Auflagefläche abgewandte Seite des Fingers eingestrahlt wird, um so die Transmission von Licht durch den Finger hindurch messbar zu machen.

Es ist Aufgabe der vorliegenden Erfindung, ein Verfahren oder eine Vorrichtung zur automatischen Aufnahme eines Fingerabdruckes anzugeben, die eine Echtheitserkennung mit hoher Wahrscheinlichkeit bei Zurückweisung sämtlicher oben genannter Fingerabdruckfalsifikate leistet.

Zur Lösung dieser Aufgabe dient das Verfahren mit den Merkmalen des Patentanspruchs 1 und die Vorrichtung mit den Merkmalen des Patentanspruchs 7. Vorteilhafte Ausführungsformen der Erfindung sind in den Unteransprüchen angegeben.

Es hat sich herausgestellt, dass sich durch Kombination von mehreren Reflexionsmessungen in mehreren Wellenlängenbereichen mit einer Messung des Transmissionsvermögens eine bessere Diskriminierung zwischen echten Fingern und sämtlichen Falsifikaten erzielen lässt, wenn die Refelxions- und Transmissionsmessungen auf Echtheitskriterien überprüft werden, die charakteristisch für oxidiertes Blut sind, um durch diese Echtheitskriterien die Echtheit des aufgelegten Fingers festzustellen. (Unter oxidiertem Blut wird hier mit Sauerstoff angereichertes Blut verstanden, d.h. mit an dem Hämoglobin angelagertem Sauerstoff). Die Transmissionsmessung wird dabei durchgeführt, indem eine Lichtquelle so angeordnet ist, dass sie in den auf den Prismenkörper aufgelegten Finger im Bereich jenseits der Auflagefläche in dessen der Auflagefläche zugewandten Seite über einen separaten Glaskörper, einstrahlt, wobei zwischen Lichtquelle und Prismenkörper eine Abschirmung vorgesehen ist, damit kein Licht aus der Lichtquelle direkt in den Prismenkörper eindringen kann. Mit Hilfe des Kamerasensors wird dann die Transmission des Lichts durch den Finger gemessen. Die Transmission kann als Funktion der Entfernung von der Lichtquelle auf der Prismenoberfläche mit Hilfe des Kamerasensors aufgezeichnet werden, und aus der entfernungsabhängigen Transmission, die einer Beziehung proportional zu e^{-α*x} folgt, kann der Extinktions-oder Absorptionskoeffizient α bestimmt werden.

Mit der vorliegenden Erfindung kann anhand rein optischer Messungen und Auswertungen eine Echtheitserkennung und Fälschungsabwehr durchgeführt werden.

Vorzugsweise wird die mindestens eine Transmissionsmessung im NIR-Bereich von 700 bis 1000 nm durchgeführt und das entsprechende Absorptionsvermögen α_{NIR} bestimmt. Als Echtheitskriterium wird dann verlangt, dass α_{NIR} in einem vorgegebenen Wertefenster [α_{MIN}, α_{MAX}] liegt. Es hat sich erwiesen, dass das Transmissionsverhalten des lebendigen Fingers ein aussagekräftiges Unterscheidungskriterium gegenüber allen Formen von Falsifikaten ist. Dieses Kriterium wird daher vorzugsweise in die Echtheitserkennung einbezogen.

Es ist ferner bevorzugt, eine erste Reflexionsmessung in einem ersten Wellenlängenbereich von 560 bis 580 nm und eine zweite Reflexionsmessung in einem zweiten Wellenlängenbereich von 600 bis 605 nm durchzuführen und jeweils das Absorptionsvermögen zu bestimmen; als Echtheitskriterium kann dann das Verhältnis der Absorptionsvermögen α₅₆₀₋₅₈₀/α₆₀₀₋₆₅₀ daraufhin überprüft werden, ob ein vorgegebener Schwellenwert, der eine abfallende Flanke charakterisiert, überschritten wird.

Vorzugsweise wird eine dritte Reflexionsmessung in einem dritten Wellenlängenbereich von 400 bis 430 nm und eine vierte Reflexionsmessung in einem vierten Wellenlängenbereich von 470 bis 520 nm durchgeführt und die jeweiligen Absorptionsvermögen bestimmt; als Echtheitskriterium wird das Verhältnis der Absorptionsvermögen α₄₀₀₋₄₃₀/α₄₇₀₋₅₂₀ daraufhin untersucht, ob es einen weiteren vorgegebenen Schwellenwert, der eine abfallende Flanke charakterisiert, überschreitet.

Als weiteres vorteilhaftes Kriterium kann eine Transmissionsmessung im Wellenlängenbereich von 400 bis 470 nm durchgeführt und geprüft werden, ob das Transmissionsvermögen oberhalb einer vorgegebenen Schwelle liegt, was als Kriterium für das Vorliegen eines Falsifikats bewertet wird. In diesem Wellenlängenbereich ist das Transmissionsvermögen eines lebenden Fingers bereits so klein, dass es unterhalb der Empfindlichkeitsschwelle von üblichen Kamerasensoren liegt. Bei vielen Falsifikaten, speziell bei den transparenten Falsifikaten, ist jedoch ein mehr oder minder großes Transmissionsvermögen auch mit üblichen Kamerasensoren noch oberhalb der Empfindlichkeitsschwelle nachweisbar, so dass die Feststellung von Transmission zur Verneinung der Echtheit herangezogen werden kann.

In einer weiteren bevorzugten Ausführungsform wird eine Reflexionsmessung in einem Wellenlängenbereich von 560 bis 580 nm und eine Reflexionsmessung in einem Wellenlängenbereich von 620 bis 640 nm durchgeführt und jeweils das Absorptionsvermögen bestimmt. Dieses Vorgehen wird bei einem ersten leichten Andruck des Fingers auf die Fingerabdruck-Aufnahmeeinheit durchgeführt und darauf bei einem erhöhten Andruck des Fingers auf die Fingerabdruck-Aufnahmeeinheit wiederholt. Als Echtheitskriterium wird überprüft, ob das Verhältnis der Absorptionsvermögen α₅₆₀₋₅₈₀/α₆₂₀₋₆₄₀ bei dem ersten leichten Andruck um einen vorgegebenen Faktor größer als das Verhältnis bei dem zweiten, stärkeren Andruck ist. Diese Verfahrensweise erlaubt eine effektive Unterscheidung zwischen einem echten Finger und einem Leichenfinger. Zum Echtheitstest wird hier das Ausbleichen eines lebenden Fingers bei höherem Andruck ausgenutzt.

Das Ausbleichen (Blanching) ist an sich bekannt und dient zur Erkennung eines lebenden Fingers. Der Effekt beruht auf der Verdrängung von oxidiertem Blut, die in einem lebenden Finger stattfindet, aber nicht in einem Leichenfinger. Die bisherigen Veröffentlichungen, die das Blanching erwähnen, gehen immer von einem grün/rot-Bildverhältnis (Intensitätsquotient von 532 nm und 630 nm) aus. Dabei wird vorzugsweise eine breitbandige Beleuchtung angenommen (thermische oder konventionelle Weißlicht-LEDs). Für praktische kommerzielle Anwendungen hat sich diese Vorgehensweise als nicht durchführbar erwiesen. Entscheidend für die praktisch verlässliche Durchführbarkeit des Verfahrens ist eine schmalbandige (+/- 10 nm FWHM) Beleuchtung bei wenigstens zwei Wellenlängenbereichen, die 570 nm und 630 nm umfassen. Im Fall von zwei separaten Lichtquellen mit Abstrahlung bei 570 +/- 10 nm (FWHM) und 630 +/- 10 nm (FWHM) kann ein Monochromsensor zur Auswertung verwendet werden. Alternativ können die beiden Farben gleichzeitig beleuchtet werden und eine Auswahl der Wellenlängenbereiche mit Hilfe eines Farbsensors vorgenommen werden, wobei der Rot- bzw. Grünkanal des RGB-Signals ausgelesen wird, um das Reflexionsbild bei 630 bzw. 570 nm zu gewinnen.

In einer vorteilhaften Ausführungsform ist vorgesehen, dass im Wellenlängenbereich von 700 bis 820 nm wenigstens zwei Transmissionsmessungen bei einer ersten und einer zweiten Wellenlänge, die größer als die erste ist, durchgeführt und als Echtheitskriterium geprüft wird, ob das Transmissionsvermögen mit zunehmender Wellenlänge abnimmt. Dieses Kriterium einer Steigung des Transmissionsvermögens als Funktion der Wellenlänge erlaubt eine sehr gute Zurückweisung von Leichenfingern, da bei diesen umgekehrt die Transmission mit wachsender Wellenlänge zunimmt.

Die Messungen in den verschiedenen Wellenlängenbereichen werden vorzugsweise durch mehrere Lichtquellen, die Licht in den jeweiligen Wellenlängenbereichen abstrahlen, durchgeführt und die Lichtquellen nacheinander selektiv eingeschaltet, um die Messungen in den jeweiligen Wellenlängenbereichen nacheinander durchzuführen, wobei ein gemeinsamer Farbkamerasensor zur Messung verwendet wird. Als Lichtquelle kann z.B. eine Mehrzahl von Leuchtdioden verwendet werden.

Zuerst muss man zwischen Blut als Gemisch und anderen Flüssigkeiten und Pigmenten unterscheiden, wobei auf die spektroskopische Auflösung zu achten ist. Generell sind für Blut als Gemisch insbesondere die 2 starken Flanken sehr charakteristisch. Es hat sich herausgestellt, dass oxidiertes und reduziertes Hämoglobin auch im Bereich 550 bis 650 nm stark unterschiedlich sind, aber mit dem Gemisch und der Überlagerung der Haut ist eine Trennung hier schwieriger. Es hat sich gezeigt, dass sich eher der Transmissionsbereich zwischen 700 und 850 nm anbietet, wo das reduzierte Hämoglobin eine geringe und abnehmende Absorption hat und das oxidierte eine stärkere und wieder ansteigende. Es wurde gefunden, dass daher hier die Unterscheidung besser vorgenommen werden kann. Im lebenden Finger liegt arterielles (oxidiertes) und venöses (reduziertes) Blut gemeinsam vor. Bei Leichen gibt es nur venöses Blut und dieses ist auch im Gewebe verteilt und lässt sich durch Druck nicht oder nur sehr gering herausdrängen.

Die Erfindung wird im Folgenden anhand von Ausführungsbeispielen in den Zeichnungen näher erläutert, in denen:
- Fig. 1: eine schematische Prinzipdarstellung zur Reflexions- messung mit einer Fingerabdruck-Aufnahmeeinheit zeigt;
- Fig. 2: eine schematische Prinzipdarstellung zur Transmissi- onsmessung mit einer Fingerabdruck-Aufnahmeeinheit zeigt;
- Fig. 3: das mittels Reflexionsmessung bestimmte Absorptions- vermögen (willkürlich skaliert) eines echten Fingers und verschiedener Falsifikate als Funktion der Wel- lenlänge zeigt;
- Fig. 4: das mittels Transmissionsmessung bestimmte Transmis- sionsvermögen (willkürlich skaliert) für einen echten Finger und verschiedene Falsifikate als Funktion der Wellenlänge zeigt;
- Fig. 5: das mittels Reflexionsmessung bestimmte Absorptions- vermögen (willkürlich skaliert) für einen Leichenfin- ger bei leichtem Andruck (gepunktet) und bei starkem Andruck (durchgezogen) zeigt;
- Fig. 6: das aus einer Reflexionsmessung bestimmte Absorpti- onsvermögen (willkürlich skaliert) eines echten Fin- gers bei leichtem Andruck (durchgezogene Linie) und bei starkem Andruck (gepunktete Linie) als Funktion der Wellenlänge zeigt; und
- Fig. 7: die Empfindlichkeitskurven eines Farbkamerasensors in den R-,G- und B-Anteilen zeigt.

Figur 1 illustriert schematisch die Messung als Reflexionsmessung. Dabei fällt ein Lichtstrahl 1 von unten durch einen Prismenkörper 2, auf dessen oberer Oberfläche 3 ein Finger auflegbar ist, wie schematisch dargestellt. Solche Fingerabdruck-Aufnahmeeinheiten machen sich den Unterschied des Brechungsindex zwischen dem Prismenkörper 2 und darauf aufliegenden Hautbereichen einerseits und andererseits zwischen Prismenkörper und Luft, in den zwischen benachbarten Hautleisten liegenden Zwischenräumen, zunutze. Das an die Grenzfläche zwischen Prismenkörper 2, wie schematisch in Figur 1 dargestellt, und umgebender Luft bzw. Fingeroberfläche auftreffende Licht wird mittels diffuser Streuung in einigen Bereichen, nämlich in den Bereichen der Hautleisten, gestreut und fällt auf eine abgeschrägte, verspiegelte Seite 4 des Prismenkorpers. Dort wo keine Hautleiste aufliegt, verlassen die Lichtstrahlen das Prisma. Dadurch erscheinen die Zwischenräume der Hautleisten im Reflexionsbild als schwarz. Durch die Außenseite des Prismas eindringende Lichtstrahlen können dieses Verfahren nicht stören, da diese in einem derart flachen Winkel auf die Oberfläche fallen müssten, um über die abgeschrägte Seite 4 auf den Kamerasensor abgebildet zu werden, dass die Bedingung für Totalreflexion erfüllt wäre, und diese nicht in das Prisma eindringen könnten.

Diese abgeschrägte Seite 4 wird über eine Optik auf einen Kamerasensor 10 abgebildet, der das Reflexionsbild und damit das Fingerabdruckbild aufnimmt. Aus dem bestimmten Reflexionsvermögen kann natürlich auch das Absorptionsvermögen abgeleitet werden.

Figur 2 illustriert schematisch die Messung als Transmissionsmessung. Dabei wird der Lichtstrahl 1 über einen Glaskörper 6 in einen Bereich des Fingers eingestrahlt, der jenseits der Auflagefläche auf dem Prismenkörper 2 liegt. Das den Finger zu durchstrahlende Licht tritt an der Auflagefläche auf den Prismenkörper 2 wieder aus und wird teilweise über die abgeschrägte Wand 4 und die Optik auf den Kamerasensor 10 geworfen. Auf diese Weise kann die Transmissionsintensität als Funktion der zurückgelegten Weglänge des Lichtes in dem aufgelegten Finger bestimmt werden, wobei aus diesem Zusammenhang gemäß der Funktion e^{-α*x}, wobei x die zurückgelegte Weglänge im Finger ist, auch ein Absorptionskoeffizient α bestimmt werden kann.

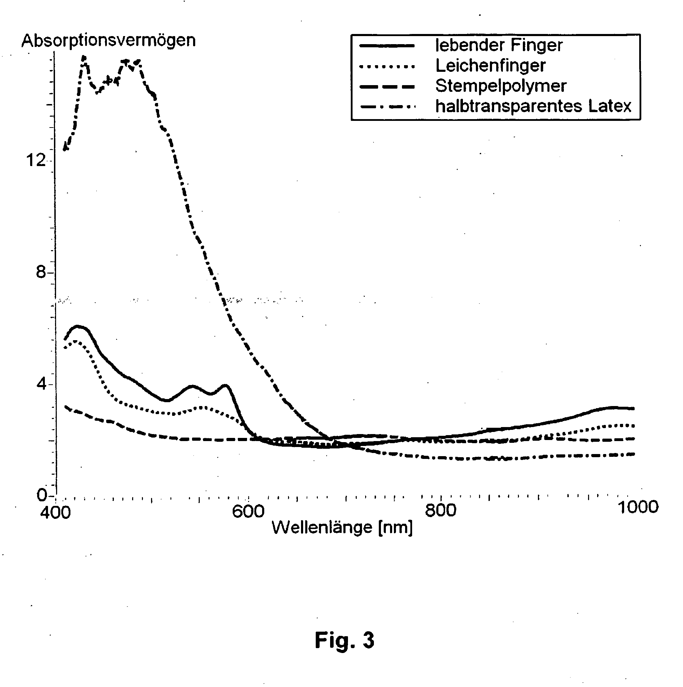

Aus Figur 3 ist ersichtlich, dass aus dem aus Reflexionsmessungen gewonnenen Absorptionsvermögen in den Wellenlängenbereichen von 560 bis 580 nm und von 600 bis 650 nm eine charakteristische abfallende Flanke im Absorptionsvermögen von dem niedrigeren zu dem höheren Wellenlängenbereich ableitbar ist, die insbesondere klar zur Unterscheidung des Falsifikats Stempelpolymer (gestrichelte Linie) dienen kann.

Ferner lässt sich durch eine Reflexionsmessung in dem Wellenlängenbereich 400 bis 430 nm und einer Reflexionsmessung in dem Wellenlängenbereich 470 bis 520 nm jeweils das Absorptionsvermögen ableiten und eine weitere abfallende Flanke vom niedrigeren zum höheren Wellenlängenbereich hin feststellen, die bei einem Latexüberzug (strichpunktiert) oder einem Stempelpolymer (gestrichelt) nicht auftritt.

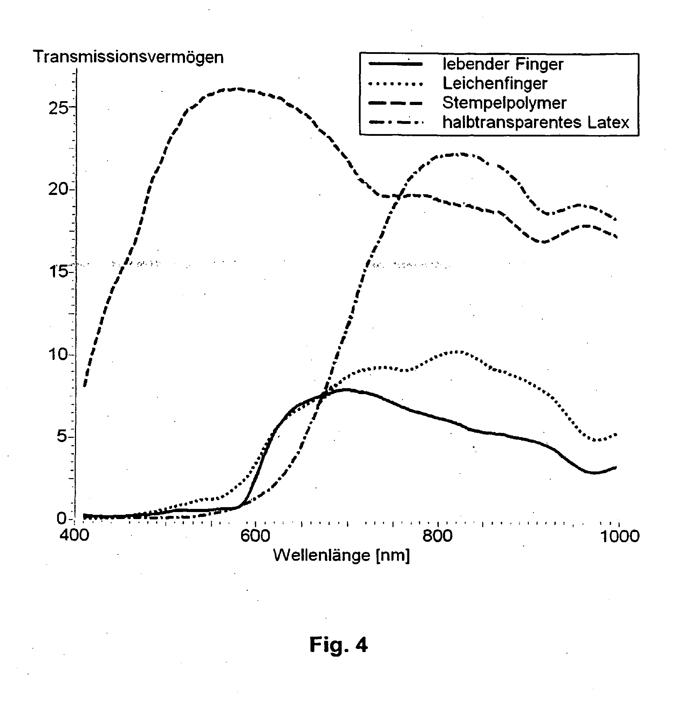

Aus Figur 4 ist ersichtlich, dass bei einer aus einer Transmissionsmessung folgenden Bestimmung des Transmissionsvermögens im NIR-Bereich von 700 bis 1.000 nm eine gute Unterscheidung gegenüber den Falsifikaten Stempelpolymer und Latexfolie ergibt, wobei bei geeigneter Wahl des Wellenlängenbereichs auch eine Unterscheidung zwischen einem echten Finger und einem Leichenfinger möglich ist, indem gefordert wird, dass das Transmissionsvermögen innerhalb eines vorgegebenen Bereiches liegt.

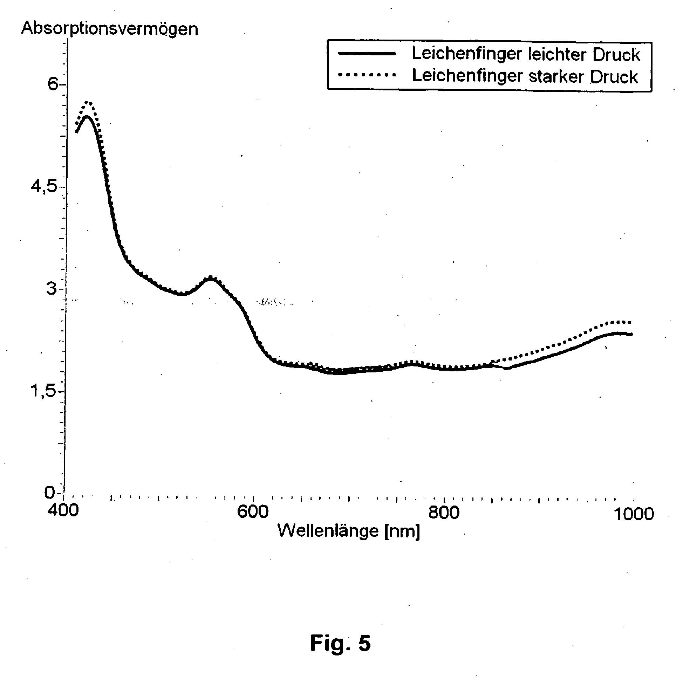

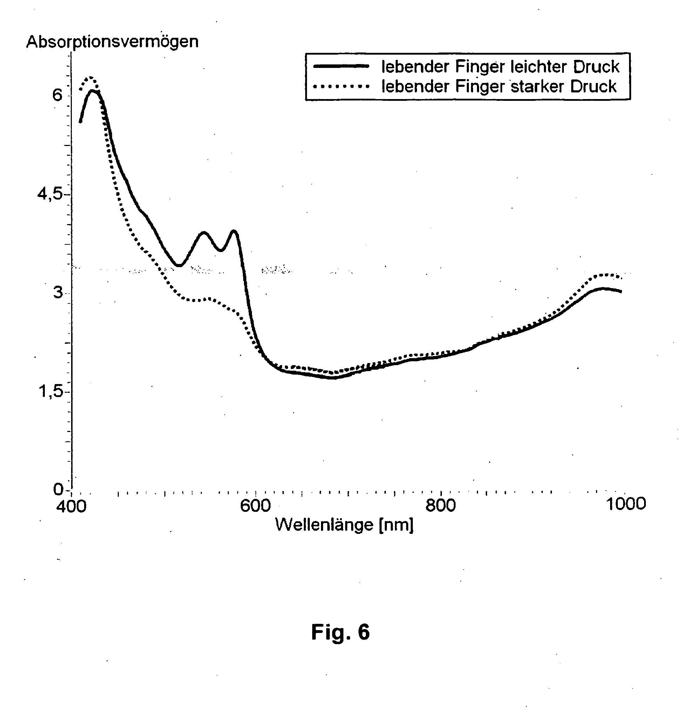

In Figur 5 ist das Absorptionsvermögen eines Leichenfingers als Funktion der Wellenlänge bei leichtem Andruck (durchgezogen) und bei starkem Andruck (punktiert) gezeigt, und in Figur 6 sind die entsprechenden Messkurven für einen echten Finger bei leichtem Andruck (durchgezogen) und bei starkem Andruck (punktiert) gezeigt. In einem Wellenlängenbereich von beispielsweise 620 bis 640 nm besteht zwischen Leichenfinger und echtem Finger kein wesentlicher Unterschied im Absorptionsvermögen. Daher kann das Absorptionsvermögen in diesem Bereich zur Normierung verwendet werden, indem jeweils das Verhältnis der Absorptionsvermögen α₅₆₀₋₅₈₀/α₆₂₀₋₆₄₀ bestimmt wird und zwar einmal bei leichtem Andruck des Fingers und einmal bei starkem Andruck des Fingers auf die Aufnahmeeinheit.

Aus Figur 6 wird deutlich, dass das Verhältnis bei einem echten Finger bei leichtem Andruck deutlich größer ist als bei stärkerem Andruck, bei dem das Blut teilweise aus dem Gewebe verdrängt wird. Dieser Abfall des Verhältnisses bei ansteigendem Druck ist charakteristisch für einen lebenden, echten Finger. Ein Vergleich mit Figur 5 zeigt, dass dort ein solcher Effekt nicht auftritt. Dadurch ist eine besonders effektive Unterscheidung zwischen einem echten Finger und dem Falsifikat Leichenfinger möglich. Dieser Effekt des Ausbleichens (Blanching) ist an sich bekannt. Die bisherigen Veröffentlichungen gingen jedoch immer von einem Grün-zu-Rot-Bildverhältnis (Intensitätsquotient von 532 nm und 630 nm) aus, wobei eine breitbandige Beleuchtung vorgenommen wurde (thermische Beleuchtung oder konventionelle Weißlicht-LEDs).. Für die praktische Einsetzbarkeit hat sich jedoch im Zusammenhang mit der vorliegenden Erfindung erwiesen, dass eine sehr schmalbandige Auswertung im Bereich der maximalen Kontraste vorgenommen werden sollte. Daher wird gemäß einer bevorzugten Ausführungsform der vorliegenden Erfindung eine Auswertung in einem schmalbandigen Bereich von 570 ± 10 nm (FWHM) und von 630 ± 10 nm (FWHM) durchgeführt. Vorzugsweise werden schmalbandige Leuchtdioden zur Beleuchtung in den beiden Wellenlängenbereichen eingesetzt. Zur Auswertung kann entweder ein Monochromsensor verwendet werden, was allerdings erforderlich macht, dass die beiden Beleuchtungen in den genannten Wellenlängenbereichen sequentiell und zeitlich nicht überlappend durchgeführt werden. Alternativ kann ein Farbsensor verwendet werden, was auch die gleichzeitige Beleuchtung in beiden Wellenlängenbereichen und die wellenlängenspezifische Auswertung mit Hilfe der Farbsensorinformationen ermöglicht.

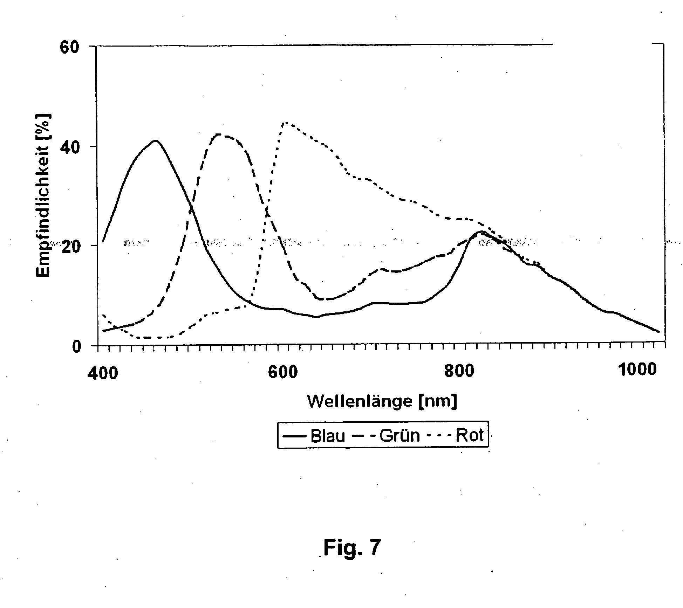

In Figur 7 ist die Empfindlichkeit einer Farbsensorkamera in den Wellenlängenbereichen Rot, Grün und Blau dargestellt. Daraus ist ersichtlich, dass der Wellenlängenbereich 570 ± 10 nm (FWHM) durch Auswertung des grünen Signalanteils des RGB-Signals ermittelt werden kann und der Wellenlängenbereich von 630 ± 10 nm (FWHM) durch Auswertung des roten Signalanteils des RGB-Signals erhalten werden kann.

## Patentansprüche

1. Verfahren zur automatischen Aufnahme eines Fingerabdruckes mit einer an ein Datenverarbeitungsgerät angeschlossenen, kamerabasierten Fingerabdruck-Aufnahmeeinheit mit einer Auflagefläche und mit Echtheitserkennung des auf die Fingerabdruck-Aufnahmeeinheit aufgelegten Fingers, wobei zur Echtheitserkennung eine Mehrzahl von Reflexionsmessungen in einer vorgegebenen Mehrzahl von Reflexionswellenlängenbereichen durchgeführt wird, wobei die kamerabasierte Fingerabdruck-Aufnahmeeinheit einen so angeordneten Kamerasensor (10) hat, um von einem auf die Auflagefläche, die durch die Oberfläche eines Prismenkörpers (2) gebildet wird, aufgelegten Finger reflektiertes Licht aufzunehmen, **dadurch gekennzeichnet, dass** mindestens eine Transmissionsmessung in einem vorgegebenen Transmissionswellenlängenbereich von dem aufgelegten Finger aufgenommen wird und zusammen mit den Reflexionsmessungen auf Echtheitskriterien überprüft wird, die charakteristisch für oxidiertes Blut sind, um durch diese Echtheitskriterien die Echtheit des aufgelegten Fingers festzustellen, wobei die Transmissionsmessung durchgeführt wird, indem Licht in einen jenseits der Auflagefläche liegenden Bereich des Fingers in dessen der Auflageflächefläche zugewandten Seite über einen separaten Glaskörper (6) eingestrahlt und das an der Auflagefläche austretendes Licht von dem Kamerasensor (10) aufgenommen wird.

2. Verfahren nach Anspruch 1, **dadurch gekennzeichnet, dass** eine erste Reflexionsmessung in einem ersten Wellenlängenbereich von 560 bis 580 nm und eine zweite Reflexionsmessung in einem zweiten Wellenlängenbereich von 600 bis 650 nm durchgeführt und jeweils die Absorptionsvermögen bestimmt werden und als Echtheitskriterium das Verhältnis der daraus abgeleiteten Absorptionsvermögen α₅₆₀₋₅₈₀/α₆₀₀₋₆₅₀ daraufhin überprüft wird, ob es einen vorgegebenen Schwellenwert, der eine abfallende Flanke charakterisiert, überschreitet.

3. Verfahren nach einem der vorhergehenden Ansprüche, **dadurch gekennzeichnet, dass** eine dritte Reflexionsmessung in einem dritten Wellenlängenbereich von 400 bis 430 nm und eine vierte Reflexionsmessung in einem vierten Wellenlängenbereich von 470 bis 520 nm durchgeführt und die jeweiligen Absorptionsvermögen bestimmt werden und als Echtheitskriterium das Verhältnis der Absorptionsvermögen α₄₀₀₋₄₃₀/α₄₇₀₋₅₂₀ daraufhin untersucht wird, ob es einen weiteren vorgegebenen Schwellenwert, der eine abfallende Flanke charakterisiert, überschreitet.

4. Verfahren nach einem der vorhergehenden Ansprüche, **dadurch gekennzeichnet, dass** die mindestens eine Transmissonsmessung im NIR-Bereich von 700 bis 1000 nm durchgeführt und das entsprechende Absorptionsvermögen α_{NIR} bestimmt wird und als Echtheitskriterium verlangt wird, dass α_{NIR} in einem vorgegebenen Wertefenster [α_{MIN}, α_{MAX}] liegt.

5. Verfahren nach einem der vorhergehenden Ansprüche, **dadurch gekennzeichnet, dass** eine weitere Transmissionsmessung in einem Transmissionswellenlängenbereich von 560 bis 580 nm und eine weitere Transmissionsmessung in einem Wellenlängenbereich von 650 bis 700 nm aufgenommen wird und das Verhältnis α₅₆₀₋₅₈₀/α₆₅₀₋₇₀₀ auf das Überschreiten eines vorgegebenen Schwellenwertes untersucht wird, um eine abfallende Flanke festzustellen.

6. Verfahren nach Anspruch 1, **dadurch gekennzeichnet, dass** eine erste Reflexionsmessung in einem Wellenlängenbereich von 560 bis 580 nm und eine Reflexionsmessung in einem Wellenlängenbereich von 620 bis 640 nm durchgeführt und jeweils die Absorptionsvermögen bestimmt werden und als Echtheitskriterium das Verhältnis der Absorptionsvermögen α₅₆₀₋₅₈₀/α₆₂₀₋₆₄₀ bei einem ersten leichten Andruck des Fingers auf die Aufnahmeeinheit und bei einem zweiten erhöhten Andruck des Fingers auf die Aufnahmeeinheit bestimmt werden und als Echtheitskriterium überprüft wird, ob das Verhältnis bei dem ersten, leichten Andruck um einen vorgegebenen Faktor größer als das Verhältnis bei dem zweiten, stärkeren Andruck ist.

7. Verfahren nach einem der vorhergehenden Ansprüche, **dadurch gekennzeichnet, dass** im Wellenlängenbereich von 700 bis 820 nm wenigstens zwei Transmissionsmessungen bei einer ersten und einer zweiten Wellenlänge, die größer als die erste ist, durchgeführt und als Echtheitskriterium geprüft wird, ob das Transmissionsvermögen mit zunehmender Wellenlänge abnimmt.

8. Verfahren nach einem der vorhergehenden Ansprüche, **dadurch gekennzeichnet, dass** eine weitere Transmissionsmessung im Bereich von 400 bis 470 nm durchgeführt und als Echtheitskriterium geprüft wird, ob das Transmissionsvermögen unterhalb einer vorgegebenen Schwelle liegt.

9. Verfahren nach einem der vorhergehenden Ansprüche, **dadurch gekennzeichnet, dass** für die Reflexionsmessungen und Transmissionsmessungen in den jeweiligen Wellenlängenbereichen mehrere Lichtquellen eingesetzt werden, deren Intensitätsmaxima in den jeweiligen Wellenlängenbereichen liegen, und dass für die Messungen in allen genannten Wellenlängenbereichen gemeinsam ein Farbkamerasensor verwendet wird.

10. Vorrichtung zur automatischen Aufnahme eines Fingerabdrukkes mit einer an das Datenverarbeitungsgerät angeschlossenen, kamerabasierten Fingerabdruck-Aufnahmeeinheit mit Auflagefläche, die durch die Oberfläche eines Prismenkörpers (2) gebildet wird, wobei die Echtheit des auf die Fingerabdruck-Aufnahmeeinheit aufgelegten Fingers geprüft wird und die kamerabasierte Fingerabdruck-Aufnahmeeinheit einen so angeordneten Kamerasensor hat, um von einem auf die Auflagefläche aufgelegten Finger reflektiertes Licht aufzunehmen, **dadurch gekennzeichnet, dass** das Datenverarbeitungsgerät und die Fingerabdruck-Aufnahmeeinheit dazu angepasst sind, ein Verfahren nach einem der vorhergehenden Ansprüche durchzuführen, und dass die Fingerabdruck-Aufnahmeeinheit so gestaltet ist, dass zur Transmissionsmessung Licht in einen jenseits der Auflagefläche liegenden Bereich des Fingers in dessen der Auflageflächefläche zugewandten Seite über einen separaten Glaskörper (6) eingestrahlt und das an der Auflagefläche austretendes Licht von dem Kamerasensor aufgenommen wird..

11. Vorrichtung nach Anspruch 10, **dadurch gekennzeichnet, dass** für jeden Reflexionswellenbereich und jeden Transmissionswellenbereich mindestens eine zugeordnete Lichtquelle vorhanden ist, die in dem zugehörigen Wellenlängenbereich leuchtet.

12. Vorrichtung nach Anspruch 11, **dadurch gekennzeichnet, dass** die Lichtquellen Leuchtdioden sind.

## Claims

1. Method for automatically recording a fingerprint using a camera-based fingerprint recording unit which is connected to a data processing device, comprises a support surface and has authenticity recognition of the finger positioned on the fingerprint recording unit, and for authenticity recognition a plurality of reflection measurements is carried out in a predetermined plurality of reflection wavelength ranges, the camera-based fingerprint recording unit having a camera sensor (10) arranged in such a manner that it picks up light reflected by a finger positioned on the support surface which is formed by the surface of a prism body (2), **characterised in that** at least one transmission measurement is recorded of the applied finger in a predetermined transmission wavelength range and together with the reflection measurements is checked for authenticity criteria which are characteristic of oxidised blood, in order to establish the authenticity of the applied finger by these authenticity criteria, the transmission measurement being carried out by radiating light into a region of the finger on the other side of the support surface, in the side thereof facing the surface of the support surface, via a separate glass body (6) and the light emerging on the support surface being picked up by the camera sensor (10).

2. Method according to claim 1, **characterised in that** a first reflection measurement is carried out in a first wavelength range of from 560 to 580 nm and a second reflection measurement is carried out in a second wavelength range of from 600 to 650 nm and in each case the absorptive power is determined and the ratio of the absorptive power α₅₅₀₋₅₈₀ /α₆₀₀₋₆₅₀ derived therefrom as an authenticity criterion is then checked as to whether it exceeds a predetermined threshold which characterises a falling edge.

3. Method according to either one of the preceding claims, **characterised in that** a third reflection measurement is carried out in a third wavelength range of from 400 to 430 nm and a fourth reflection measurement is carried out in a fourth wavelength range of from 470 to 520 nm and the respective absorptive power is determined and the ratio of the absorptive power α₄₀₀₋₄₃₀ / α₄₇₀₋₅₂₀ as an authenticity criterion is then checked as to whether it exceeds a further predetermined threshold which characterises a falling edge.

4. Method according to any one of the preceding claims, **characterised in that** the at least one transmission measurement is carried out in the NIR range of from 700 to 1000 nm and the corresponding absorptive power α_{NIR} is determined and, as an authenticity criterion, it is necessary for α_{NIR} to be within a predetermined value window [α_{MIN}, α_{MAX}].

5. Method according to any one of the preceding claims, **characterised in that** a further transmission measurement is recorded in a transmission wavelength range of from 560 to 580 nm and a further transmission measurement is recorded in a wavelength range of from 650 to 700 nm and the ratio α₅₆₀₋₅₈₀ / α₆₅₀₋₇₀₀ is checked to ascertain whether a predetermined threshold has been exceeded in order to establish a falling edge.

6. Method according to claim 1, **characterised in that** a first reflection measurement is carried out in a wavelength range of from 560 to 580 nm and a reflection measurement is carried out in a wavelength range of from 620 to 640 nm and in each case the absorptive power is determined and the ratio of the absorptive power α₅₆₀₋₅₈₀ / α₆₂₀₋₆₄₀ as an authenticity criterion is determined for a first light contact pressure of the finger on the recording unit and for a second increased contact pressure of the finger on the recording unit and a check is made as an authenticity criterion whether the ratio for the first light contact pressure is greater by a predetermined factor than the ratio for the second heavier contact pressure.

7. Method according to any one of the preceding claims, **characterised in that** in the wavelength range of from 700 to 820 nm at least two transmission measurements are carried out for a first and a second wavelength which is greater than the first, and a check is made as an authenticity criterion to ascertain whether the transmission power decreases as the wavelength increases.

8. Method according to any one of the preceding claims, **characterised in that** a further transmission measurement is carried out in a range of from 400 to 470 nm and a check is made as an authenticity criterion to ascertain whether the transmission power is below a predetermined threshold.

9. Method according to any one of the preceding claims, **characterised in that** for the reflection measurements and transmission measurements in the respective wavelength ranges a plurality of light sources are used, the maximum intensity values of which are within the respective wavelength ranges and **in that** a colour camera sensor is commonly used for the measurements in all the mentioned wavelength ranges.

10. Apparatus for automatically recording a fingerprint comprising a camera-based fingerprint recording unit which is connected to the data processing device and has a support surface formed by the surface of a prism body (2), the authenticity of the finger positioned on the fingerprint recording unit being checked and the camera-based fingerprint recording unit having a camera sensor arranged in such a manner that it picks up light reflected by a finger positioned on the support surface, **characterised in that** the data processing device and the fingerprint recording unit are adapted to carry out a method according to any one of the preceding claims, and **in that** the fingerprint recording unit is configured such that for the transmission measurement, light is radiated into a region of the finger on the other side of the support surface, in the side thereof facing the surface of the support surface, via a separate glass body (6) and the light emerging on the support surface is picked up by the camera sensor.

11. Apparatus according to claim 10, **characterised in that** for each reflection wave range and each transmission wave range at least one allocated light source is provided which shines in the associated wavelength range.

12. Apparatus according to claim 11, **characterised in that** the light sources are light-emitting diodes.

## Revendications

1. Procédé d'enregistrement automatique d'une empreinte digitale avec une unité d'enregistrement d'empreinte digitale basée sur une caméra, raccordée à un dispositif de traitement des données et munie d'une surface de pose, comportant une détection d'authenticité du doigt appliqué sur l'unité d'enregistrement d'empreinte digitale, sachant que, pour la détection d'authenticité, une pluralité de mesures de réflexion sont mises en oeuvre dans une pluralité prédéfinie de plages de longueur d'ondes de réflexion, l'unité d'enregistrement d'empreinte digitale, basée sur une caméra, comportant un capteur de caméra (10) agencé de telle sorte pour enregistrer la lumière réfléchie par un doigt appliqué sur la surface de pose formée par la surface d'un corps prismatique (2), **caractérisé en ce qu'**au moins une mesure de transmission est enregistrée dans une plage de longueurs d'ondes de transmission prédéfinie du doigt appliqué et, conjointement avec les mesures de réflexion, est examinée sur le plan des critères d'authenticité qui sont caractéristiques pour le sang oxydé, afin de constater, à l'appui de ces critères d'authenticité, l'authenticité du doigt appliqué, la mesure de transmission étant mise en oeuvre par l'injection de la lumière, via un corps en verre (6) séparé, dans une zone, située de l'autre côté de la surface de pose du doigt, dans la face du doigt orientée vers la surface de la surface de pose, et par l'enregistrement de la lumière sortant de la surface de pose par le capteur de caméra (10).

2. Procédé selon la revendication 1, **caractérisé en ce qu'**une première mesure de réflexion est effectuée dans une première plage de longueurs d'ondes de 560 à 580 nm et une deuxième mesure de réflexion est effectuée dans une deuxième plage de longueurs d'ondes de 600 à 650 nm, et dans chaque cas est déterminé le pouvoir d'absorption, et le rapport du pouvoir d'absorption α₅₆₀₋₅₈₀/α₆₀₀₋₆₅₀ qui en résulte est examiné, en tant que critère d'authenticité, pour vérifier s'il est supérieur à une valeur seuil prédéfinie qui caractérise un flanc descendant.

3. Procédé selon l'une quelconque des revendications précédentes, **caractérisé en ce qu'**une troisième mesure de réflexion est effectuée dans une troisième plage de longueurs d'ondes de 400 à 430 nm et une quatrième mesure de réflexion est effectuée dans une quatrième plage de longueurs d'ondes de 470 à 520 nm, et les pouvoirs d'absorption respectifs sont déterminés, et le rapport du pouvoir d'absorption α₄₀₀₋₄₃₀/α₄₇₀₋₅₂₀ est examiné, en tant que critère d'authenticité, pour vérifier s'il est supérieur à une autre valeur seuil prédéfinie qui caractérise un flanc descendant.

4. Procédé selon l'une quelconque des revendications précédentes, **caractérisé en ce que** ladite au moins une mesure de transmission est effectuée dans le domaine de l'infrarouge proche de 700 à 1 000 nm et **en ce que** le pouvoir d'absorption α_{NIR} correspondant est déterminé, et il est demandé que α_{NIR}, en tant que critère d'authenticité, se situe dans une fenêtre de valeurs (α_{MIN}, α_{MAX}) prédéfinie.

5. Procédé selon l'une quelconque des revendications précédentes, **caractérisé en ce qu'**une autre mesure de transmission dans une plage de longueurs d'ondes de transmission de 560 à 580 nm est enregistrée et une autre mesure de transmission dans une plage de longueurs d'ondes de 650 à 700 nm est enregistrée, et **en ce que** le rapport du pouvoir d'absorption α₅₆₀₋₅₈₀lα₆₅₀₋₇₀₀ est examiné pour vérifier s'il est supérieur à une valeur seuil prédéfinie afin de constater un flanc descendant.

6. Procédé selon la revendication 1, **caractérisé en ce qu'**une première mesure de réflexion est effectuée dans une plage de longueurs d'ondes de 560 à 580 nm et une mesure de réflexion est effectuée dans une plage de longueurs d'ondes de 620 à 640 nm, et **en ce que** dans chaque cas est déterminé le pouvoir d'absorption, et le rapport du pouvoir d'absorption α₅₆₀₋₅₈₀/α₆₂₋₆₄₀, en tant que critère d'authenticité, est déterminé lors d'une première légère pression du doigt sur l'unité d'enregistrement et lors d'une deuxième pression plus élevée du doigt sur l'unité d'enregistrement, et il est vérifié si le rapport, en tant que critère d'authenticité, lors de la première pression légère est supérieur selon un facteur prédéfini au rapport lors de la deuxième pression plus forte.

7. Procédé selon l'une quelconque des revendications précédentes, **caractérisé en ce que** dans le domaine de longueurs d'ondes de 700 à 820 nm sont effectuées au moins deux mesures de transmission à une première et une deuxième longueur d'ondes qui est supérieure à la première, et en tant que critère d'authenticité il est vérifié si le pouvoir de transmission diminue lorsque la longueur d'ondes augmente.

8. Procédé selon l'une quelconque des revendications précédentes, **caractérisé en ce qu'**une autre mesure de transmission est effectuée dans la plage de 400 à 470 nm et en tant que critère d'authenticité il est vérifié si le pouvoir de transmission se situe au-dessous d'un seuil prédéfini.

9. Procédé selon l'une quelconque des revendications précédentes, **caractérisé en ce que** pour les mesures de réflexion et les mesures de transmission dans les plages de longueurs d'ondes respectives, on utilise plusieurs sources lumineuses, dont les maxima d'intensité se situent dans les plages de longueurs d'ondes respectives, et **en ce que** pour les mesures dans toutes les plages de longueurs d'ondes mentionnées on utilise un capteur de caméra couleur commun.

10. Dispositif pour l'enregistrement automatique d'une empreinte digitale avec une unité d'enregistrement d'empreinte digitale basée sur une caméra, raccordée à un dispositif de traitement des données et munie d'une surface de pose formée par la surface d'un corps prismatique (2), l'authenticité du doigt appliqué sur l'unité d'enregistrement d'empreinte digitale étant vérifiée, et l'unité d'enregistrement d'empreinte digitale basée sur une caméra comportant un capteur de caméra agencé de telle sorte pour enregistrer la lumière réfléchie par un doigt appliqué sur la surface de pose **caractérisé en ce que** le dispositif de traitement des données et l'unité d'enregistrement d'empreinte digitale sont adaptées pour mettre en oeuvre un procédé selon l'une quelconque des revendications précédentes, et **en ce que** l'unité d'enregistrement d'empreinte digitale est configurée de telle sorte que pour la mesure de transmission, une lumière est injectée, via un corps en verre (6) séparé, dans une zone du doigt, située de l'autre côté de la surface de pose du doigt, dans la face du doigt orientée vers la surface de la surface de pose, et la lumière sortant de la surface de pose est enregistrée par le capteur de caméra.

11. Dispositif selon la revendication 10, **caractérisé en ce que** pour chaque plage de longueurs d'ondes de réflexion et pour chaque plage de longueurs d'ondes de transmission est prévue au moins une source lumineuse associée, qui éclaire dans la plage de longueurs d'ondes associée.

12. Dispositif selon la revendication 11, **caractérisé en ce que** les sources lumineuses sont des diodes électroluminescentes.
